# EUROPEAN PATENT APPLICATION

(11) **EP 4 631 472 A2**
(43) Date of publication of application: **15.10.2025**
(21) Application number: 25169577.1
(22) Date of filing: 09.04.2025
(51) Int. Cl.: A61C 8/00

(54) **DENTAL IMPLANT WITH IMPROVED THREAD DESIGN**

(30) Priority: 10.04.2024 US 202463632192 P; 10.04.2024 US 202463632211 P; 10.02.2025 US 202563756544 P
(71) Applicant: Zetta25 AG, 8047 Zurich (CH)
(72) Inventor: FREIWALD, Florian, 64832 Babenhausen (DE); HALLDIN, Anders, 431 38 Molndal (SE); LUZIA, Nadav, Ramat Yishai (IL); RASH, Elad, Bethlehem (IL)
(74) Representative: Aldridge, Henry Alexander

(57) **Abstract**

A dental implant may include among other features a first thread extending along and from at least one of: part of an apical portion or part of a coronal portion, wherein the first thread includes: a first side extending from a body, a crest connected to the first side at an outer extent of the first side; and a second side connected to the crest on an opposing side from the first side, wherein the second side extends from the crest to body, wherein the second side forms an acute angle of between 45 and 85 degrees with respect to an outer surface of the body to create an undercut space adjacent thereto that provides an interlocking engagement with bone or an extraction socket to resist a lateral force applied on the dental implant.

## Description

### CROSS-REFERENCE TO RELATED APPLICATIONS

The application claims the benefit of U.S. Provisional Patent Application Serial No. 63/632,192, filed on April 10, 2024, U.S. Provisional Patent Application Serial No. 63/632,211, filed on April 10, 2024, and U.S. Provisional Patent Application Serial No. 63/756,544, filed on February 10, 2025, the benefit of priority of each of which is claimed hereby, and which are incorporated by reference herein in their entirety.

### FIELD

The present subject matter pertains generally to the field of dental implants. More particularly, but not by way of limitation, the subject matter pertains to a thread design for the dental implant.

### BACKGROUND

A dental implant can be used in an oral treatment procedure to restore appearance or function of a removed tooth. A dental implant can mimic a root of a natural tooth that is replaced. A surgeon can replace the natural tooth with a prosthetic tooth (such as a crown, bridge, or denture) that is mounted on a coronal portion of an abutment, which in turn, is attached to the dental implant on an apical portion. During surgery, the surgeon can insert the dental implant into a dental bone cavity. The dental implant typically has a cylindrical or conical body and utilizes a thread as a means for anchoring to bone. The outer surface of the implant can be intentionally roughened or otherwise coated or fabricated in a manufacturing step to improve osseointegration of bone with the dental implant. An example conventional implant, (sometimes called a fixture) is described in U.S. Patent 11,877,909, the contents of which are incorporated by reference in its entirety.

Unlike bone screws and many other orthopedic implants, dental implants are subject to cyclic compression loads and lateral forces caused by mastication forces. Additionally, the quality of the jaw bone affixed to during implantation can vary. Combined, the mastication forces and the varying bone quality as well as the design of the dental implant itself can result in micromotion between the bone and the dental implant after surgical implantation prior to osseointegration. Such micromotion is undesirable as it can inhibit osseointegration.

### OVERVIEW

The present patent application describes examples of dental implants with various different thread designs. As discussed herein, the threads are configured to provide an interlocking engagement with bone or another component such as an extraction socket. These configurations for the threads better resist a lateral force applied on the dental implant. As discussed above, the lateral forces result from mastication, and can induce micromotion of the dental implant upon implantation into the bone. The present threads are thus configured to reduce the micromotion of the dental implant at and after implant placement prior to osseointegration. Reduced micromotion is important particularly with when the dental implant is functioning in lower bone qualities.

The present inventors have recognized, among other things, dental implant designs that address stability limitations of conventional dental implants through an improved thread geometry. These dental implants of the present disclosure have a thread configuration with an angulated design that creates an undercut space between the crest of the thread and a connection of the thread with the implant body. This undercut space receives bone and forms an interlocking engagement with the surrounding bone that better resists lateral forces.

According to one example, the thread has a first side (a coronal side or apical side) extending from the body at an obtuse angle and a second side (the other of the coronal side or apical side) forming an acute angle between substantially 45 to substantially 85 degrees with the body. This configuration creates an improved mechanical interlocking engagement that reduces micromotion compared to standard designs where only thread tips engage the bone.

The present inventors have further recognized that implants with the disclosed thread configurations are particularly effective for extraction socket applications and in instances where only partial bone engagement or only some quality bone engagement occurs, as the undercut thread geometry provides superior anchorage by "hooking" into the available bone or socket structure to maintain lateral stability and discourage micromotion. The undercut thread geometry forming the hooking feature may vary in geometry (or have different configurations) according to the various examples some of which are illustrated and described herein.

The present application provides for various different implant designs having different thread configurations including a straight body design (with a straight core providing maximum fixation through 100% bone contact), a tapered design (with a tapering core body and thread of reducing cross-sectional area particularly in an apical portion), a body-tapered design that includes the tapering core body but has threads in the apical region that maintain substantially a same outer diameter at the crest thereof for between at least 50% to substantially 85% of a longitudinal extent of the apical portion before reducing in diameter toward an apical end, a reverse thread design having coronal-lateral angulated thread and a dual thread design using two threads one thread having a coronal-lateral angulation relative to the body and another thread having an apical-lateral angulation relative to the body. The dual thread design enables bi-directional locking of the dental implant in both coronal and apical directions within the bone.

The present inventors additionally recognize a new drilling protocol that allows for a narrower osteotomy relative to the implant core diameter, maximizing bone-to-implant contact and further enhancing stability. Thus, the present application discloses an approach to stability and resistance to micromotion that distinguishes the design from conventional dental implants or bone screws that are primarily designed for axial loading rather than for countering the lateral forces specific to mastication. The disclosed thread geometries maintain more consistent bone engagement even when only partially surrounded by bone or only partially surrounded by quality bone, providing reliable fixation through the interlocking mechanism created with the undercut space resulting from angulation of the thread.

Recently, a bone screw disclosed in US 11,596,459B2 and a dental implant having shaped flanks disclosed in US 8,337,205B2 have been developed. However, this bone screw and dental implant have a different configuration for the thread/flank and have a different function from the angulated thread design of the present application. With regard to the '459 patent, this has a thread with increased thickness at the crest. Additionally, the thread is formed by multiple angulated surfaces. Such a design is difficult to impossible to manufacture reliably. In contrast, the present angulated thread designs can be manufactured using traditional methodology similar to that of traditional thread designs. The '205 patent has similar design methodology as the '459 patent having flanks formed by multiple surfaces, which results in changing angulation and utilizes a separate collar component rather than a second thread. This requires the user to handle at least two pieces instead of one when implanting.

### BRIEF DESCRIPTION OF THE DRAWINGS

In the drawings, which are not necessarily drawn to scale, like numerals can describe similar components in different views. Like numerals having different letter suffixes can represent different instances of similar components. The drawings illustrate generally, by way of example, but not by way of limitation, various examples discussed in the present document.
FIG. 1 is a side view of a dental implant with a straight body design and a thread design for enhanced bone engagement, in accordance with one example of the present disclosure.
FIG. 2 is a side view of another dental implant having the straight body design and a thread design for enhanced bone engagement, in accordance with one example of the present disclosure.
FIG. 3 is a side view of a dental implant having the straight body design and a thread design for enhanced bone engagement, in accordance with one example of the present disclosure.
FIG. 4 is a side view of yet another dental implant having the straight body design and a thread design for enhanced bone engagement, in accordance with one example of the present disclosure.
FIG. 4A is an enlarged cross-section view of a portion of the thread design of FIG. 4.
FIG. 5 is a side view of a dental implant having a tapered design for the body and thread for enhanced bone engagement, in accordance with one example of the present application.
FIG. 6 is a side view of another dental implant having another tapered design for the body and thread for enhanced bone engagement, in accordance with one example of the present application.
FIG. 7 is a side view of a dental implant having a tapered body design but maintaining substantially a same thread diameter for a part of an apical portion, in accordance with one example of the present application.
FIG. 8 is a side view of another dental implant having another tapered body design but maintaining the same thread diameter for a part of an apical portion, in accordance with one example of the present application.
FIG. 9 is a side view of yet another dental implant having another tapered body design but maintaining the same thread diameter for a part of an apical portion, in accordance with one example of the present application.
FIG. 9A is a cross-sectional view of the dental implant of FIG 9.
FIG. 9B is an enlarged cross-sectional view of a portion of the thread design of FIG. 9A.
FIG. 10 is a side view of a dental implant with a reverse thread design, in accordance with one example of the present disclosure.
FIG. 10A is an enlarged cross-section view of a portion of the thread design of FIG. 10.
FIG. 11 is a side view of a dental implant with a dual thread design for enhanced bidirectional bone engagement, in accordance with one example of the present disclosure.
FIG. 11A is a cross-sectional view of the dental implant of FIG. 11.
FIG. 11B is an enlarged view of a portion of the dental implant of FIG. 11 including cutting features.
FIG. 12 is an assembly of the dental implant of FIGS. 11-11B coupled to bone, in accordance with one example of the present disclosure.
FIG. 13 is another assembly of the dental implant of FIGS. 11-11B coupled to bone and having as side exposed and free of the bone, in accordance with one example of the present disclosure.
FIG. 14 is a cross-sectional view showing the interlocking engagement of a dental implant within an extraction socket, in accordance with one example of the present disclosure.
FIG. 14A is a second cross-sectional view of the dental implant and the extraction socket of FIG. 14.
FIG. 15 is a side view of a dental implant with a dual thread design for enhanced bidirectional bone engagement similar to that of the embodiment of FIGS. 11-11B, in accordance with one example of the present disclosure.
FIG. 15A is an enlarged view of a portion of the dental implant of FIG. 15, in particular, a macro-thread of an apical and intermediate portion.
FIG. 15B is an enlarged view of a portion of the dental implant of FIG. 15, in particular, a micro-thread of a coronal portion.
FIG. 16 is a side view of a dental implant having a tapered design for the body and thread similar to those of FIGS. 5 and 6, but additionally including a thread design having an undercut formed at least partially by a groove adjacent a base of the thread with the groove extending into a body of the dental implant, in accordance with one example of the present application.
FIG. 17A is a cross-sectional view of a dental implant having a reverse thread design similar to that of the embodiment of FIGS. 10 and 10A, but having the undercut formed at least partially by a groove adjacent the base of the thread with the groove extending into the body of the dental implant, in accordance with one example of the present disclosure.
FIG. 17B is a cross-sectional view of the dental implant of FIG. 16.
FIG 18A is an enlarged view of a portion of the dental implant of FIG. 17A, in particular, illustrating the undercut formed at least partially by the groove adjacent the base of the thread with the groove extending into the body of the dental implant in further detail.
FIG. 18B is an enlarged view of a portion of the dental implant of FIGS. 16 and 17B, in particular illustrating the undercut formed at least partially by the groove adjacent the base of the thread with the groove extending into the body of the dental implant in further detail.
FIG. 19A is a perspective view of a coronal portion of a dental implant having a generally triangular cross-sectional shape, in accordance with one example of the present disclosure.
FIG. 19B is a perspective view of a coronal portion of a dental implant having a generally cylindrical shape, in accordance with one example of the present disclosure.
FIG. 20A is a side view of a dental implant having a tapered design for the body and thread similar to those of FIGS. 5 and 6, but having a thread design with a different undercut geometry therefrom, in accordance with one example of the present application.
FIG. 20B is a side view of a dental implant having a reverse thread design similar to that of the embodiment of FIGS. 10 and 10A, but having a thread design with a different undercut geometry therefrom, in accordance with one example of the present application.
FIG. 21A is a cross-sectional view of the dental implant of FIG. 20A.
FIG. 21B is a cross-sectional view of the dental implant of FIG. 20B.
FIG. 22A is an enlarged view of a portion of the dental implant of FIGS. 20A and 21A, in particular, illustrating the undercut in further detail.
FIG. 22B is an enlarged view of a portion of the dental implant of FIGS. 20B and 21B, in particular, illustrating the undercut in further detail.

### DETAILED DESCRIPTION

The term "coronal" is here and throughout this application used to indicate a direction towards a head end or trailing end of the dental implant. Conversely, the term "apical" indicates a direction towards an insertion or leading end of the component. Thus, apical and coronal are opposite directions. Further, the terms "axial", "axial direction" or "axially" are used throughout this application to indicate a direction taken from the coronal end to the apical end, or vice versa. The terms "radial", "radial direction" or "radially" indicate a direction perpendicular to axial. The term "lateral", "lateral direction" or "laterally" is used synonymously with the terms "radial", "radial direction" or "radially"

The term "pitch" is used to indicate the axial distance between adjacent tops of a threading. The term "lead" is used to indicate the distance advanced parallel to the longitudinal axis when the dental implant is turned one revolution, i.e. it corresponds to the pitch multiplied with the number of thread spirals. For a single thread spiral having a constant pitch, the lead is equal to the pitch; for a double thread spiral, the lead is twice the pitch.

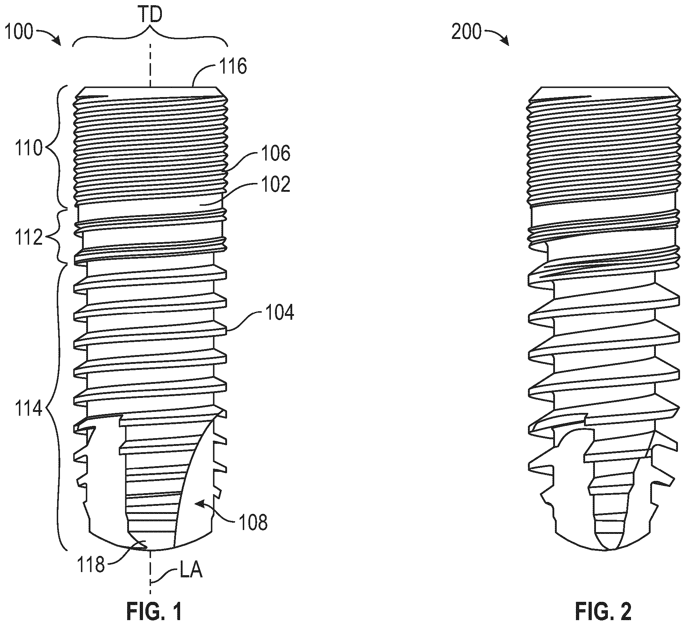

FIG. 1 shows a dental implant 100, having a body 102, a first thread 104, a second thread 106, a cutting flute 108, a coronal portion 110, an intermediate portion 112, an apical portion 114, a coronal end 116, an apical end 118, a longitudinal axis LA, and a maximum thread diameter TD.

In some embodiments, the dental implants described herein may have a substantially flat coronal end surface which is perpendicular to the longitudinal axis of the dental implant. Alternatively, the coronal end surface may have a sloped contour relative to the longitudinal axis of the dental implant, e.g. such that when positioned within the jawbone the length of the dental implant is larger on a lingual side and shorter on a buccal side of the dental implant. Another alternative is a saddle-shaped or wave-like coronal end surface. The coronal end may be of any suitable shape. For example it may be substantially cylindrical, generally triangular, etc.

Referring to FIG. 1, dental implant 100 is arranged along the longitudinal axis LA having the coronal portion 110 with the coronal end 116, the intermediate portion 112, and the apical portion 114 with the apical end 118. The longitudinal axis LA extends between the coronal and apical ends. According to the example of FIG. 1, the body 102, which forms a core of the dental implant 100 has a straight body design that maintains a substantially uniform diameter along the longitudinal length of the longitudinal axis LA. The design for the body 102 and other features of the dental implant 100 can achieve substantially a 100% bone-to-implant contact (e.g., contact along full lengths of the body 102 and all surface areas of the body 102, the first thread 104 and/or the second thread 106. However, other body designs and thread geometries are desirable according to some applications and are discussed subsequently.

The body 102 can be made of suitable material such as metal such as titanium or titanium alloy. This material can achieve biocompatibility with the biological structures of the patient. Various surfaces of the body 102 and/or the first thread 104 and/or the second thread 106 can be roughened or otherwise configured to induce bone ingrowth as known in the art. The first thread 104 extends along the apical portion 114 and extends laterally outward from body 102 relative to the longitudinal axis LA. According to some examples, the first thread 104 can extend to the intermediate portion 112. The first thread 104 has a helical shape as is generally known. However, the first thread 104 can be angulated in a novel manner such as being canted to extend apically and laterally relative to the longitudinal axis LA. The first thread 104 reaches the maximum thread diameter TD at a crest thereof as further described herein.

The second thread 106 extends along the coronal portion 110 and can extend to the intermediate portion 112. The second thread 106 can differ in geometry from the first thread 104 and may or may not be angulated in the novel manner described herein. According to one example, the second thread 106 can be a micro-thread and the first thread can be a macro-thread. The term "micro-thread" may be used to indicate a thread having a height which is no greater than 0.25 mm. The term "macro-thread" may be used to indicate a thread having a height which is greater than 0.25 mm. However, other differences in geometry between micro-thread and macro-tread are contemplated. Thus, the first thread 104 can be 1.1 times to 50 times larger than the second thread 106 according to some examples. However, the arrangements and relative sizes of the macro-thread and micro-thread can be altered from those shown according to further examples.

The dental implant 100 includes the cutting flute 108 that enables self-cutting thread capabilities, making the dental implant 100 less sensitive to bone quality variations. The cutting flute 108 can interrupt the first thread 104 along parts or all of the apical portion 114. However, according to other examples, one or more cutting flutes 108 can extend to the intermediate portion 112 and/or the coronal portion 110.

As is further discussed herein and shown in more detail subsequently, the first thread 104 is angulated in an apical-lateral direction. Such angulation can be on both sides (a first side and a second side) of the first thread 104. According to some examples, the first thread 104 can form an acute angle of between 45-85 degrees with respect to an outer surface of the body 102 along the first side or second side, creating an undercut space that receives bone therein. This undercut space adjacent the first side or the second side of the first thread 104 provides interlocking engagement with the bone to resist lateral forces. The configuration of the first thread 104 with the interlocking mechanism formed as a result of the undercut space distinguishes the present dental implant 100 from conventional implant designs where only thread tips engage the bone. Rather, with the present dental implant 100 the first thread 104 includes at least one side (or both sides), particularly in the area of the undercut region that additionally engage bone. This is beneficial as the dental implant 100 has better lateral stability due to bone and side surface(s) contact as a result of the angulation of the first thread 104.

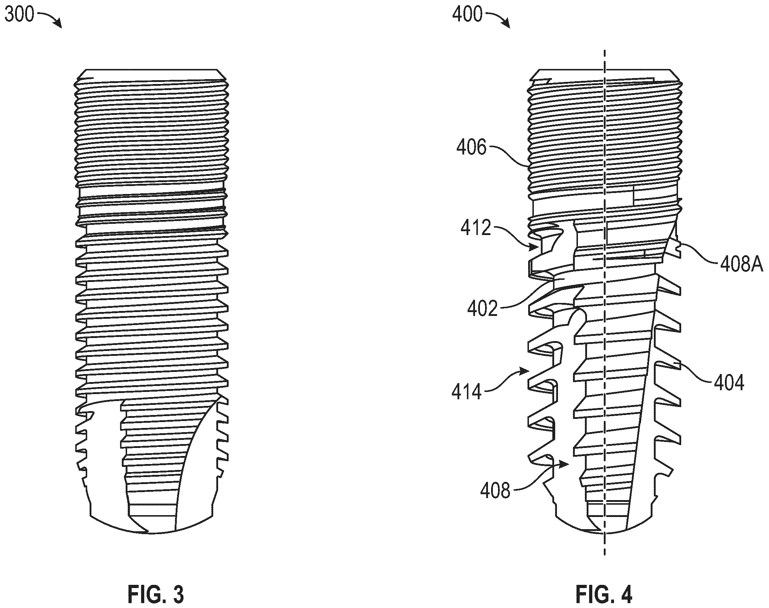

FIGS. 2-4 show additional examples of dental implants 200, 300 and 400, respectively. These examples have the straight design for the body similar to FIG. 1 but include different geometry for the first thread and the second thread. However, each of the dental implants 200, 300 and 400 utilizes the angulated first thread as discussed in FIG. 1. It should be noted that the larger the first thread extends a lateral distance from the body the greater the fixation capability of the dental implant. Thus, the dental implant 200 achieves a greater fixation than those of FIGS. 1 and 3, for example.

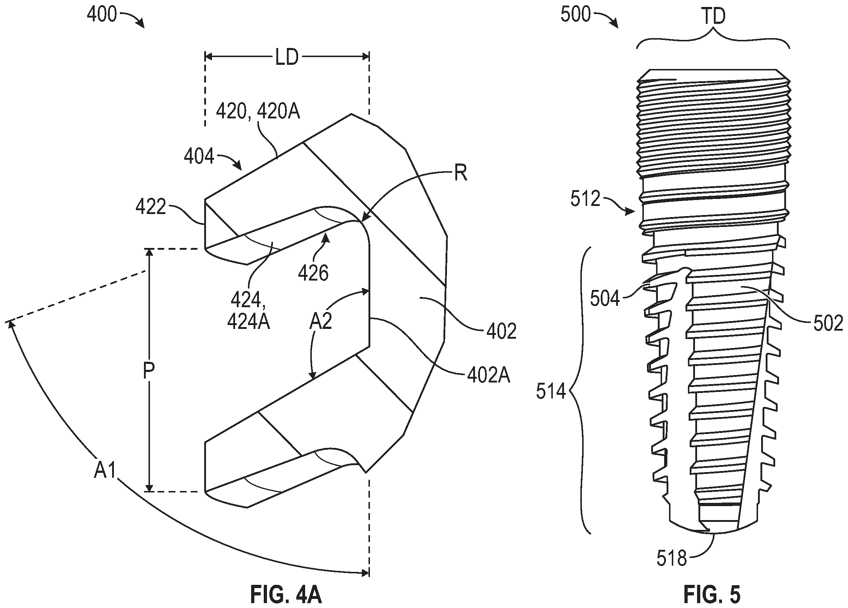

FIG. 4 shows the dental implant 400 having the straight design for the body 402 with substantially a same diameter of the body 402 and having a first thread 404 that has a substantially same maximum diameter at the crest from between substantially 50% to substantially 85% of the elongate extent thereof. FIG. 4 additionally shows cutting flutes 408 that extend from an apical portion 414 to at least an intermediate portion 412. The cutting flutes 408 create bone cutting features 408A for a second thread 406 in addition to creating bone cutting features for the first thread 404. The cutting flutes 408 (and hence the cutting features formed thereby) may be continuous or discontinuous according to various examples.

FIG. 4A shows an enlarged cross-section of a portion of the body 402 and a portion of the first thread 404 of FIG. 4. FIG. 4A shows the dental implant 400, the body 402, an outer surface 402A of the body 402, the first thread 404, a lateral distance LD of the first thread 404, a pitch P of the first thread 404, a first side 420 of the first thread 404, a crest 422 of the first thread 404, a second side 424 of the first thread 404, an undercut space 426, an acute angle A1, an obtuse angle A2 and a radius R.

As shown in FIG. 4A, the body 402 can have the outer surface 402A. The first thread 404 has a lateral distance LD of extent outward from the body 402. As shown in FIG. 4A, the first thread 404 includes the first side 420 that extends from the body 402 at the obtuse angle A2 relative to the outer surface 402A. This first side 420 connects to the crest 422 at an outer extent of the first side 420. The second side 424 extends from the crest 422 back to the body 402, forming the acute angle A1. The acute angle A1 can be between 45 and 85 degrees with respect to the outer surface 402A. For example, the acute angle A1 may be 45 degrees, 55 degrees, 60 degrees, a range from 45 to 55 degrees, from 55 to 60 degrees, from 60 to 65 degrees, from 65 to 70 degrees, from 70 to 75 degrees, from 75 to 80 degrees, from 80 to 85 degrees, etc. According to one example, a desired range for A1 is between about 60 degrees to about 70 degrees. However, other ranges such as the examples above are contemplated. Although the acute angle A1 is not indicated or specifically discussed in many of the FIGURES herein, it is understood such an acute angle will be created by the thread configurations in many of the example embodiments discussed herein. This acute angle A1 creates the undercut space 426 between and adjacent the second side 424 and the body 402. The undercut space 426 provides the interlocking engagement with bone or an extraction socket to resist lateral forces applied to the dental implant 400 as discussed previously.

The obtuse angle A2 can vary with the difference of the acute angle A1 and thus can range from 135 degrees to 95 degrees with respect to the outer surface 402A. For example, the obtuse angle A2 may be 135 degrees, 125 degrees, 120 degrees, a range from 135 to 125 degrees, from 125 to 120 degrees, from 120 to 115 degrees, from 115 to 110 degrees, from 110 to 105 degrees, from 105 to 100 degrees, from 100 to 95 degrees, etc. According to one example, a desired range for A2 is between about 120 degrees to about 110 degrees. However, other ranges such as the examples above are contemplated.

The crest 422 can be pointed, rounded, angulated or otherwise shaped rather than being blunt (flat) as shown in FIG. 4A. The first side 420 of the first thread 404 can be substantially parallel with the second side 424 or can differ therefrom such as the example shown in FIG. 4A. This difference in the angle of the first side 420 from the second side 424 can be between 0.1 degrees to substantially 40 degrees, inclusive. This difference in angulation between the first side 420 and the second side 424 can result in the first thread 404 narrowing in thickness when traveling outward to the crest 422 or increasing in thickness when traveling outward to the crest 422. As a result, the crest 422 can be relatively thinner or thicker than a base of the first thread 404 at the attachment to the body 402. As shown in FIG. 4A, the first side 420 and second side 424 are each formed by substantially a single surface 420A and 424A. These single surfaces 420A and 424A are arranged at their respective angles, making the first thread 404 completely angled on both the first side 420 and the second side 424 having single surfaces extending between the body 402 and the crest 422.

The radius R can provide a connection between the second side 424 and the body 402. However, in FIG. 4A edges shown as rounded can be sharp and those shown as sharp may be rounded off (radiused) in alternative embodiments. The radius R can be between 0.05 mm to 0.5 mm, for example. The lateral distance LD can vary depending on application and desired fixation. According to one example, the lateral distance LD can be between 1.0 mm and 0.1 mm although other dimensions are contemplated. In the example of FIG. 4A, the first side 420 can be a coronal side of the first thread 404 and the second side 424 can be an apical side of the first thread 404.

FIG. 5 shows a dental implant 500 according to another example. The dental implant 500 can include thread forming an undercut as described previously. The dental implant 500 includes a body 502, a first thread 504 with a maximum thread diameter TD. The tapered design with the body 502 results in the body 502 having a gradually reducing cross-sectional area particularly in an apical portion 514. The angle of the taper for the body 502 can be between 0.1 degrees and 25 degrees, inclusive. The first thread 504 along the apical portion 514 is also gradually reducing in diameter along the apical portion 514 toward the apical end 518. As a result, the lateral distance of the crest of the first thread 504 gradually reduces from the maximum thread diameter TD near an intermediate portion 512 to a smaller diameter at and adjacent the apical end 518.

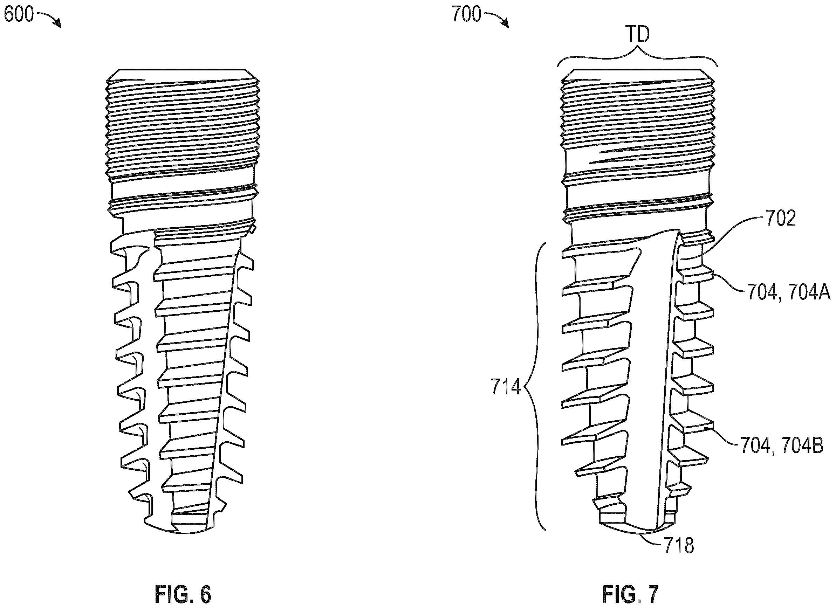

FIG. 6 shows another dental implant 600 having the tapered design for the body similar to that of the example of FIG. 5. The dental implants 500 and 600 of examples of FIGS. 5 and 6 and those of FIGS. 7-9B discussed subsequently can provide for benefits including that the tapered body configuration condenses the surrounding bone during installation, which increases installation torque through enhanced pressure and friction. This controlled condensation of bone, which can range from 1-20%, provides for increased rotational stability that can be beneficial when coupling an abutment to the implant. The condensation of bone along the elongate extent of the body specifically helps resist turning of the implant when the abutment is attached via a screw. From a surgical perspective, the tapered design allows for a simplified and standardized approach, as the osteotomy can be prepared to a tip of the body diameter rather than the full body diameter. This enables the use of a single drilling protocol that works effectively across all bone types. The tapered body design can achieve 100% bone-to-implant contact, providing enhanced support that leads to high primary installation stability. This complete contact is important for successful osseointegration and long-term implant stability. The design is particularly effective in extraction socket applications, where the tapered profile helps achieve optimal fit and stability even when only a portion of the implant circumference engages with the bone. Additionally, the tapered design can have self-cutting threads and specific cutting features in both apical and coronal portions. These features, combined with the tapered body geometry, create an implant that effectively prepares its path during insertion while maintaining the structural benefits of the tapered design.

FIGS. 7-9A show dental implants 700, 800 and 900 respectively. These dental implants 700, 800 and 900 have yet a third configuration that differs from the prior two configurations of FIGS. 1-6. The dental implants 700, 800 and 900 have a body-tapered design that includes the tapering core (body) but each dental implant 700, 800 and 900 has threads in the apical region that maintain substantially a same outer diameter at the crest thereof for between at least 50% to substantially 85% of a longitudinal extent of the apical portion before reducing in diameter toward an apical end. Such configuration further improves the fixation capability of the dental implants 700, 800 and 900.

Specifically in the context of FIG. 7, the dental implant 700 has a body 702 and a first thread 704 with different lateral distances along the apical portion 714. In particular, a first lateral distance 704A near a top of the apical portion 714 differs, for example, from a lateral distance 704B near a middle-lower distance of the apical portion 714. This difference in the lateral distance is a result of the maximum thread diameter TD for the first thread 704 being the same for between at least 50% to substantially 85% of a longitudinal extent of the apical portion 714 before reducing in diameter toward an apical end 718.

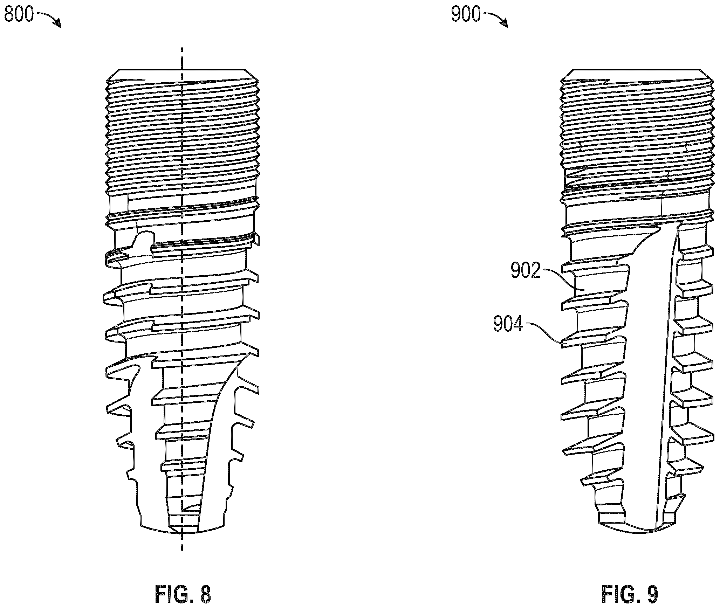

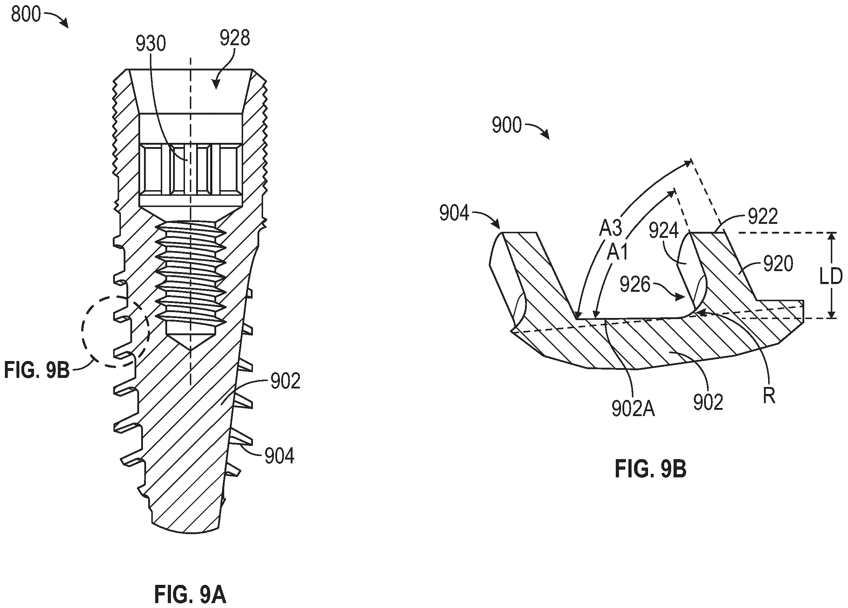

FIGS. 9 and 9A show the dental implant with the body-tapered design including for the body 902 and the thread 904. FIG. 9A shows that the lateral distance of the first threads 904 grows in extent when traveling toward an apical end before reducing to the apical end. Thus, a maximum thread extent (lateral distance) can be achieved between 50% and 85% of the apical portion of the first thread 904 before reducing in extent toward and to the apical end. FIG. 9A additionally shows a coupling recess 928 and coupling features 930 for receiving and capturing an abutment and a fastener.

FIG. 9B shows an enlarged cross-section of a portion of the body 902 and a portion of the first thread 904 of FIG. 9A. The example of FIG. 9B can be similar or identical to that previously described in regard to FIG. 4A previously. Thus, FIG. 9B shows the dental implant 900, the body 902, an outer surface of the body 902A, the first thread 904, a lateral distance LD of the first thread 904, a first side 920 of the first thread 904, a crest 922 of the first thread 904, a second side of the first thread 924, an undercut space 926, an acute angle A1, a second acute angle A3 and a radius R.

The first thread 904 includes the first side 920 (a coronal side) that extends from the body 902 at the second acute angle A3 (the counterpart angle to obtuse angle A2 selected in FIG. 4A) relative to the outer surface 402A. The first side 920 connects to the crest 922 at an outer extent for the first side 920. The second side 924 (an apical side) extends from the crest 922 back to the body 902, forming the acute angle A1. The acute angle A1 can be between 45 and 85 degrees with respect to the outer surface 902A. This acute angle A1 creates the undercut space 926 between and adjacent the second side 924 and the body 902. The undercut space 926 provides the interlocking engagement with bone or an extraction socket to resist lateral forces applied to the dental implant 400 as discussed previously. The acute angle A1 can be substantially the same as the second acute angle A3 or can differ by between 0.1 degrees to substantially 40 degrees, inclusive.

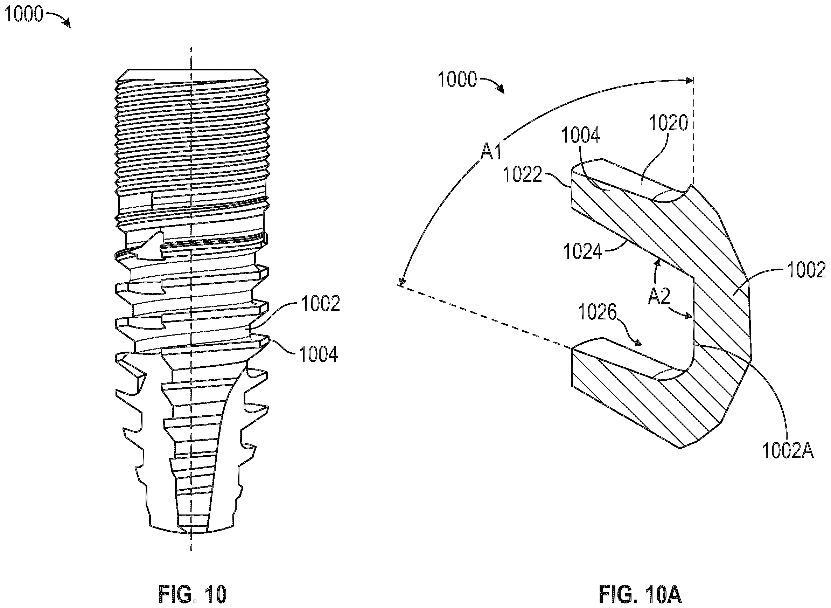

FIG. 10 shows yet another example of a dental implant 1000 with a fourth configuration. FIG. 10A shows an enlarged cross-section of a portion of the body 1002 and a portion of the first thread 1004 of FIG. 10. This configuration can include a body 1002 having straight or tapered configurations as previously described but a first thread 1004 with a different design. In particular, the configuration of the first thread 1004 can have an angulation in a coronal-lateral direction rather than the apical-lateral direction of FIGS. 1-9B. The configuration for the first thread 1004 can eliminate undercuts, which enables easier cleaning, debridement, and removal of biofilm. This configuration also makes the dental implant 1000 beneficial for the treatment of peri-implantitis. However, the configuration of the first thread 1004 still maintains the radial tensile anchoring thread functionality discussed previously and allows the dental implant 1000 to still provide improved stability against lateral loads.

FIG. 10A shows an enlarged cross-section of a portion of the body 1002 and a portion of the first thread 1004 of FIG. 10. FIG. 10A shows the dental implant 1000, the body 1002, an outer surface of the body 1002A, the first thread 1004, a first side 1020 of the first thread 1004, a crest 1022 of the first thread 1004, a second side of the first thread 1024, a space 1026, an acute angle A1 and an obtuse angle A2.

As shown in FIG. 10A, the body 1002 can have the outer surface 1002A. The first thread 1004 includes the first side 1020 (a coronal side) that extends from the body 1002 at the acute angle A1 relative to the outer surface 1002A. This first side 1020 connects to the crest 1022 at an outer extent of the first side 1020. The second side 1024 extends from the crest 1022 back to the body 402, forming the obtuse angle A2. The acute angle A1 can be between 45 and 85 degrees with respect to the outer surface 1002A. This acute angle A1 creates a space 1026 between and adjacent the first side 1020 and the body 1002. The configuration of FIG. 10A is similar to that of FIG. 4A described previously but rather than the apical side (the second side) having the acute angle as in FIG. 4A, in FIG. 10A the coronal side (the first side) has the acute angle A1. The second side 1024 of the first thread 1004 can be substantially parallel with the first side 1020 or can differ therefrom such as the example shown in FIG. 10A. This difference in the angle of the second side 1024 from the first side 1020 can be between 0.1 degrees to substantially 40 degrees, inclusive.

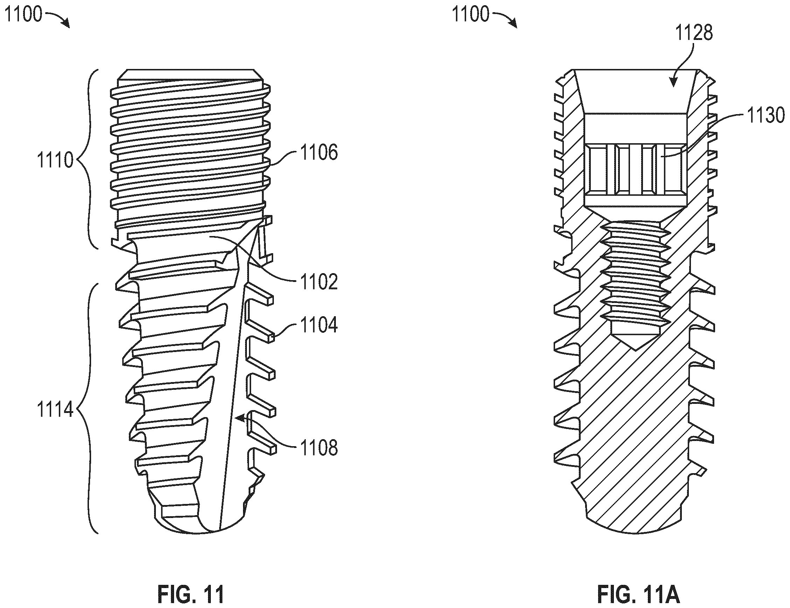

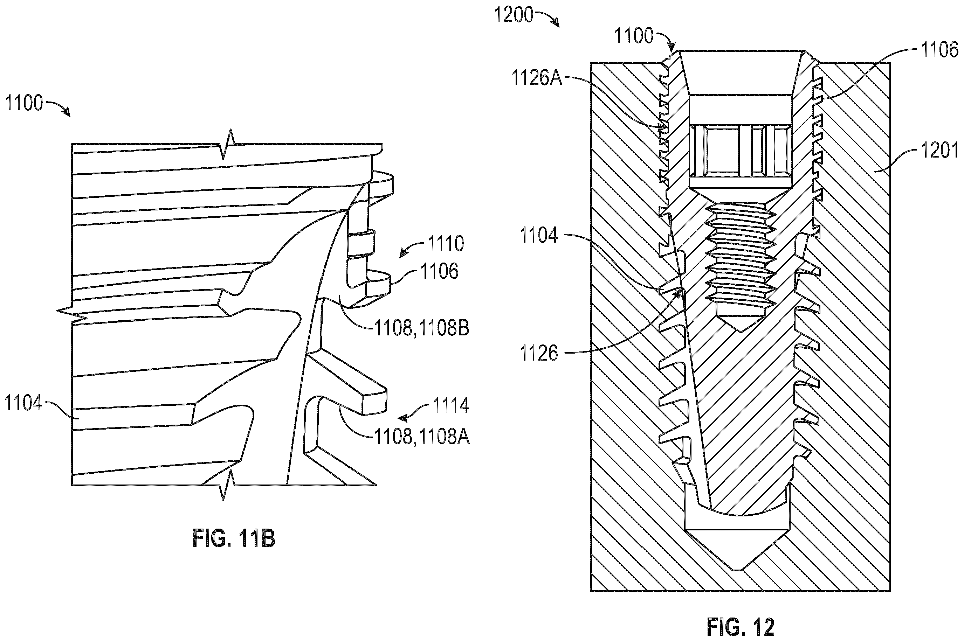

FIGS. 11, 11A and 11B show yet another example of a dental implant 1100 having a fifth configuration. All the example configurations discussed herein (one-five of FIGS. 1-11B and additional example dental implants that have yet to be shown and discussed) can have the dental implant configured to achieve contact with the bone for substantially an entirety of a surface area of the body and the first thread.

Referring first to FIG. 11, the dental implant 1100 can include a body 1102, a first thread 1104, a second thread 1106, one or more cutting flutes 1108, a coronal portion 1110 and an apical portion 1114. Additionally, as shown in FIG. 11A, the dental implant 1100 can include a coupling recess 1128 and coupling features 1130 for coupling with an abutment and fastener.

Returning to FIG. 11, the second thread 1106 can extend along the coronal portion 1110 but can differ from examples shown previously in that the second thread 1106 can have an angulation in a coronal-lateral direction rather than utilizing a standard thread design. Additionally, the dental implant includes the first thread 1104 that is angulated in the apical-lateral direction similar to any of the examples of FIGS. 1-9B. Thus, the example of FIGS. 11-11B combines the fourth configuration but utilized for the second thread 1106 of the coronal portion with any of the previously described first-third configurations for the first thread and body. The configuration of the dental implant 1100 having both angulated first thread and angulated second thread in different directions (apical-lateral and coronal lateral) provides locking in both coronal and apical directions through this opposing threading pattern.

As shown in FIG. 11B, the one or more cutting flutes 1108 can extend from the apical portion 1114 continuously up to the coronal portion 1110. This allows for a plurality of cutting features 1108A to be formed for the first thread 1104 and one or more cutting features 1108B to be formed for the second thread 1106. Thus, as shown in FIG. 11B, the first thread 1104 is configured to form a plurality of self-cutting features 1108A and the second thread 1106 forms one or more self-cutting features 1108B. The plurality of self-cutting features 1108A and the one or more self-cutting features 1108B are from the flute 1108 that extends from the apical portion 1114 to the coronal portion 1110 in a continuous uninterrupted manner.

FIG. 12 shows an assembly 1200 of the dental implant 1100 of FIGS. 11-11B with a bone 1201. The assembly 1200 shows the undercut space 1126 of bone-thread engagement adjacent the first thread 1104 such as just below the second apical side thereof. Additionally, the assembly 1200 shows the space 1126A of thread-bone engagement adjacent the second thread 1106 such as just above the first coronal side thereof. This configuration provides for locking in both coronal and apical directions through this opposing threading pattern as well as the improved lateral stability discussed previously.

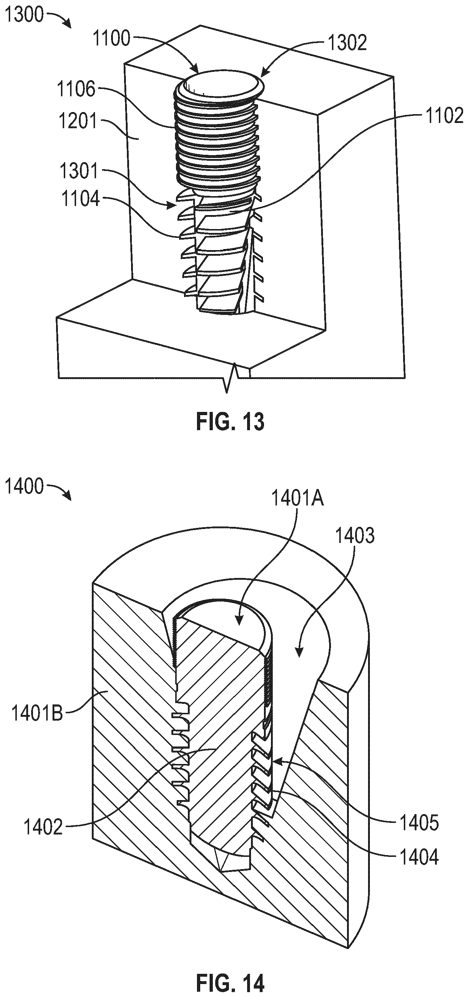

FIG. 13 shows an assembly 1300 where the dental implant 1100 is only engaged with the bone 1201 along a first side thereof and has a second side 1301 exposed not in engagement with the bone 1201. This can be the result of recession of the bone 1201 or can be due to poor bone quality in the area of implantation. FIG. 13 thus shows a configuration for the assembly 1300 where the body 1102 and first thread 1104 are configured to have a first portion of a circumference of the body 1102 and the first thread 1104 exposed from the bone (in area 1301) and the first thread 1104 (and additionally in this instance the second thread 1106) is configured to provide sufficient fixation to resist the lateral force when engaging the bone along only a second portion of the circumference of the body 1102 and the first thread 1104.

As an example to achieve the arrangement of FIG. 12, a method 1302 of implanting a dental implant such as the dental implant 1100 into a bone such as the bone 1201 can be utilized. This method 1302 can include drilling to create an aperture, wherein the aperture has substantially a same diameter as a diameter of an apical tip of the body 1102 of the dental implant 1100; inserting the dental implant 1100 into the aperture; and engaging the dental implant with the bone in both an apical direction using the first thread 1104 and a coronal direction using the second thread 1106. Engaging the dental implant 1100 can result from the first thread 1104 being angulated in an apical-lateral direction to form an undercut space adjacent an apical side of the first thread 1104 and from the second thread 1106 being angulated in a coronal-lateral direction to create a space adjacent a coronal side of the second thread 1106.

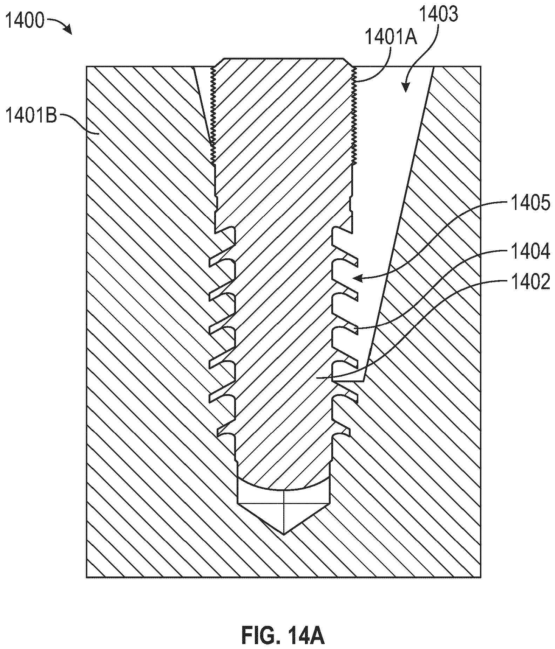

FIGS. 14 and 14A are cross-sectional views showing an assembly 1400 with the interlocking engagement of a dental implant 1401A within an extraction socket 1401B. The extraction socket 1401B is the empty cavity in the jawbone that remains after tooth extraction, which can serve as a site for dental implant placement. An extraction socket 1401B typically has a cone-type configuration and an implant placed there typically is positioned as shown where one side of the implant engages with the bone while the other side remains exposed.

As shown in FIGS. 14 and 14A, the dental implant 1401A includes a body 1402 and a first thread 1404 such as those previously described. The extraction socket 1401B includes a recess 1403. The body 1402 and the first thread 1404 are exposed on a first side 1405 as a result of a recess 1403. FIGS. 14 and 14A show a configuration for the assembly 1400 where the body 1402 and first thread 1404 are configured to have a first portion of a circumference of the body 1402 and the first thread 1404 exposed from the extraction socket 1401B (in area 1405 due to the recess 1403). FIGS. 14 and 14A illustrate that the dental implant 1401A can be optimized for support in any cases of partial bone contact, which may happen due to placement in extraction sockets, narrow bone walls, undesirable jaw bone shapes or bone loss. FIGS. 14 and 14A shows a simplified worst-case model of a socket which can used to simulate what the dental implant 1401A does in a worst case bone scenario.

As demonstrated such as in FIGS. 13-14A, the thread configuration such as with the first thread 1404 of FIGS. 14 and 14A provides enhanced fixation when engaging the bone along only a portion of its circumference. This can be important in scenarios where the implant may only achieve partial bone contact. The angulated thread design for the dental implant 1401A creates the undercut space (discussed and shown previously) that provides superior gripping force with the bone, offering better resistance to lateral forces even in cases of limited bone engagement.

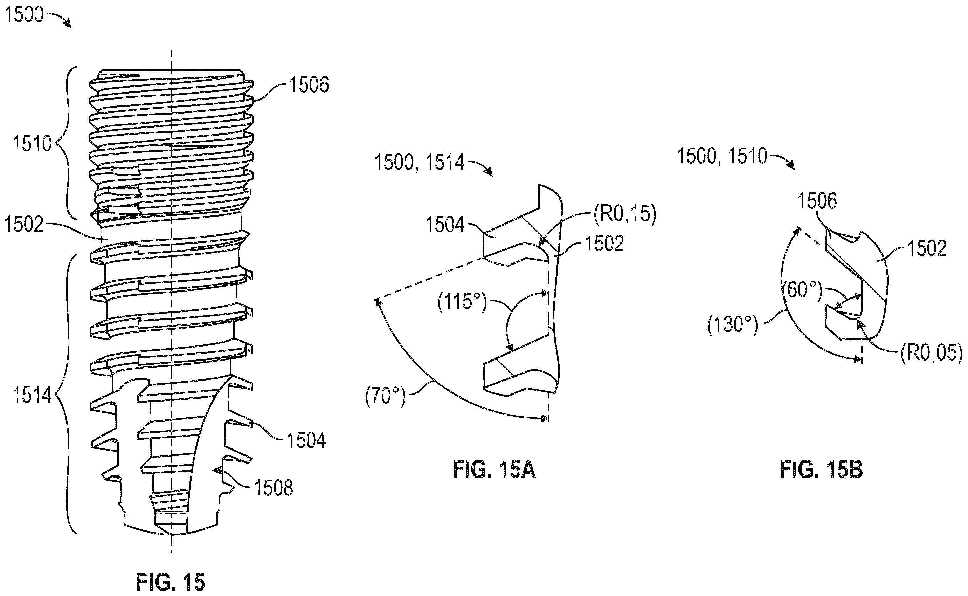

FIGS. 15, 15A and 15B show yet another example of a dental implant 1500 having a sixth configuration that is similar to that of the fifth configuration previously shown in FIGS. 11-11B. Referring first to FIG. 15, the dental implant 1500 can include a body 1502, a first thread 1504, a second thread 1506, one or more cutting flutes 1508, a coronal portion 1510 and an apical portion 1514.

As shown in FIG. 15, the second thread 1506 can extend along the coronal portion 1510 but can differ from examples shown previously in that the second thread 1506 can have an angulation in a coronal-lateral direction rather than utilizing a standard thread design. Additionally, the dental implant includes the first thread 1504 that is angulated in the apical-lateral direction similar to any of the examples of FIGS. 1-9B and 11-11B. Thus, the example of FIGS. 15-15B combines the fourth configuration in a manner similar to the fifth configuration of FIGS. 11-11B having the second thread 1506 of the coronal portion angulated in an opposing direction to that of the apical and/or intermediate portions. Thus, the configuration of the dental implant 1500 having both angulated first thread and angulated second thread in different directions (apical-lateral and coronal lateral) provides locking in both coronal and apical directions through this opposing threading pattern.

As shown in FIG. 15, the one or more cutting flutes 1508 can extend from the apical portion 1514 continuously up to the coronal portion 1510. This allows for a plurality of cutting features similar to those discussed previously to be formed for the first thread 1504 and the second thread 1506.

FIG. 15A shows a cross-sectional view of the dental implant 1500 at the apical portion 1514 showing the design of the first thread 1504. The angulation shown and other geometry such as the radius of the first thread 1504 with the body 1502 is exemplary and can vary from example to example. Similarly, FIG. 15B shows a cross-sectional view of the dental implant 1500 at the coronal portion 1510 showing the design of the second thread 1506. The angulation shown and other geometry such as the radius of the second thread 1506 with the body 1502 is exemplary and can vary from example to example.

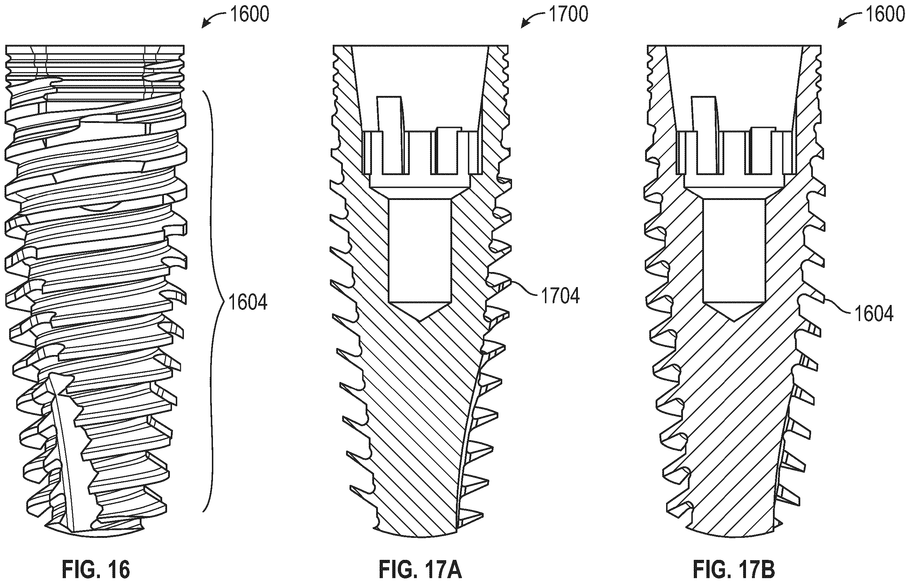

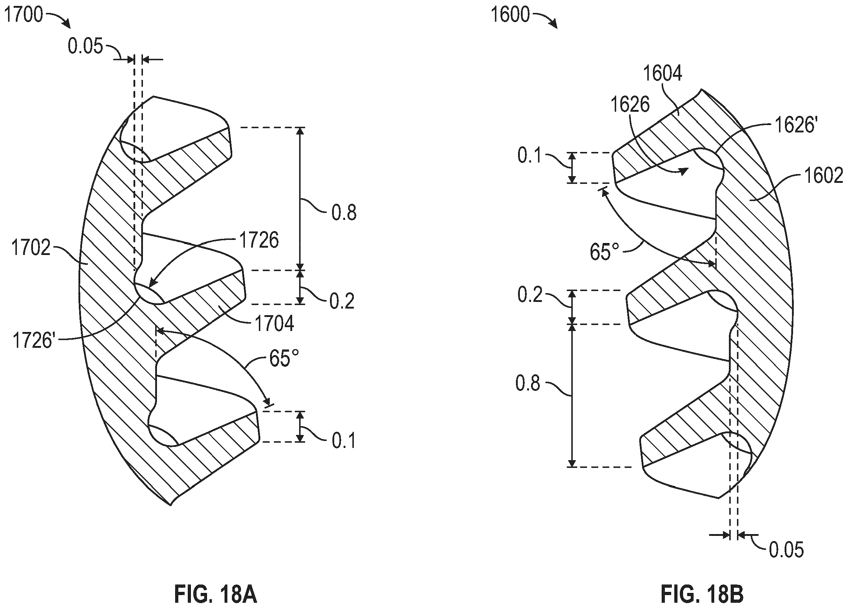

FIGS. 16, 17B and 18B show a dental implant 1600 according to a seventh configuration. The dental implant 1600 can have a tapered design for the body and thread similar to those of FIGS. 5 and 6. The dental implant 1600 can include thread that provides for an undercut adjacent thereto as previously discussed. As previously discussed, this undercut from the thread design provides for improved stability when implanted in bone. The thread angulation of the dental implant 1600 depicted in the FIG. 18B is 65 degrees, which is within the 45 degrees to 85 degree range discussed previously. As previously described the thread angulation and geometry provides for the undercut space, which provides for improved stability of the dental implant 1600 when implanted in bone as previously discussed. Furthermore, the 65 degrees shown in FIG. 18B is merely exemplary of one particular embodiment and the various ranges previously discussed are contemplated according to further embodiments. As with examples previously described and those later described herein, a first thread 1604 may run any suitable distance along the length of the dental implant 1600. In some embodiments, the thread may be present on up to 90% of the length of the dental implant 1600, although other lengths are possible.

As best shown in FIG. 18B, the dental implant 1600 differs from other embodiments of the present disclosure in that it includes a thread design for the first thread 1604 that has an undercut space 1626 partially formed by a groove 1626' adjacent a base of the first thread 1604 with the groove 1626' extending into a body 1602 of the dental implant 1600. FIG. 18B shows the geometry of the groove 1626' which can be rather shallow (e.g., have a depth into the body 1602) of less than 1 mm, less than 0. 1 mm, or less than 0.01 mm. FIG. 18B shows an exemplary depth of 0.05 mm according to one example along with some other relevant geometry for the first thread 1604. According to one example, the first thread 1604 may contain grooves 1626' along the entire length that the first thread 1604 runs such that the total surface area of the grooves 1626' is approximately 4 mm² for the example of the dental implant 1600 shown. That is, there is a difference of about 4 mm² between the first thread 1604 and body 1602 having the grooves 1626' and a dental implant that does not have the grooves. In some examples according to the present disclosure, the surface area of the groove 1626' may be defined by comparing a cutting surface of a tool that is used to cut into the body 1602 to create the groove 1626' with the surface of a tool used to form a traditional thread design that does not create an undercut. The difference that is determined for the surface that is cut away from the body 1602 may correspond to the surface area of the groove 1626'.

FIG. 17A and 18A show yet another example dental implant 1700 according to an eighth configuration. The dental implant 1700 can have a configuration similar to that of the dental implant 1000 of FIGS. 10 and 10A discussed previously but includes (as shown in FIG. 18A) a thread design for a first thread 1704 that has an undercut space 1726 partially formed by a groove 1726' adjacent a base of the first thread 1704 with the groove 1726' extending into a body 1702 of the dental implant 1700. Thus, the embodiment of FIGS. 17A and 18A is a combination of the concepts of FIGS. 10 and 10A and those of FIGS. 16, 17B and 18B. The dental implant 1700 can include thread that provides for an undercut adjacent thereto as previously discussed. As previously discussed, this undercut from the thread design provides for improved stability when implanted in bone. The thread angulation of the dental implant 1700 depicted in the FIG. 18A is 65 degrees, which is within the 45 degrees to 85 degree range discussed previously. As previously described the thread angulation and geometry provides for the undercut space, which provides for improved stability of the dental implant 1700 when implanted in bone as previously discussed. Furthermore, the 65 degrees shown in FIG. 18A is merely exemplary of one particular embodiment and the various ranges previously discussed are contemplated according to further embodiments. Again, exemplary geometry for the first thread 1704 and the groove 1726' is shown in FIG. 18A but this is simply an example of dimensions in millimeters that can be used according to one embodiment.

An advantage of having the groove 1626' and/or groove 1726' recognized herein is that this recess imparts a chamber that can collect blood, which has positive effects for osseointegration among other benefits in addition to assisting in forming the undercut space 1626 and/or undercut space 1726.

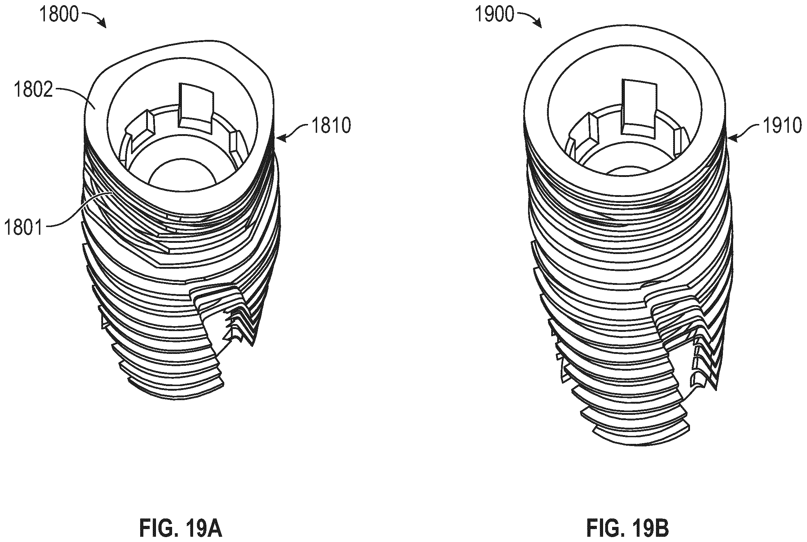

FIG. 19A shows another example of a dental implant 1800 having a coronal portion 1810 with a generally triangular cross-sectional configuration. This can be the result of one or more flats 1801 (substantially flat surface(s)) or non-circular threaded portions and/or body 1802 along sections of the coronal portion 1810, for example. Dental implant 1800 may have a thread design according to the seventh configuration.

FIG. 19B shows an example of a dental implant 1900 have a generally cylindrical coronal portion 1910. Dental implant 1900 may also have a thread design according to the seventh configuration.

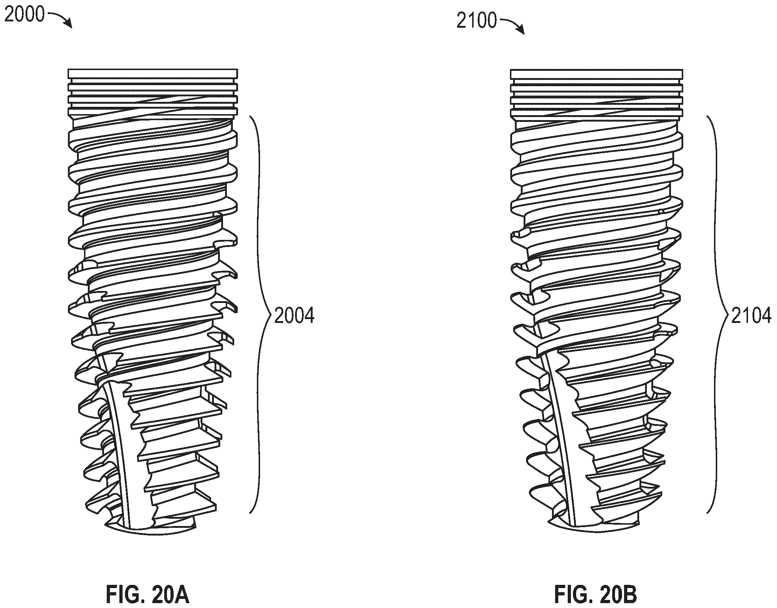

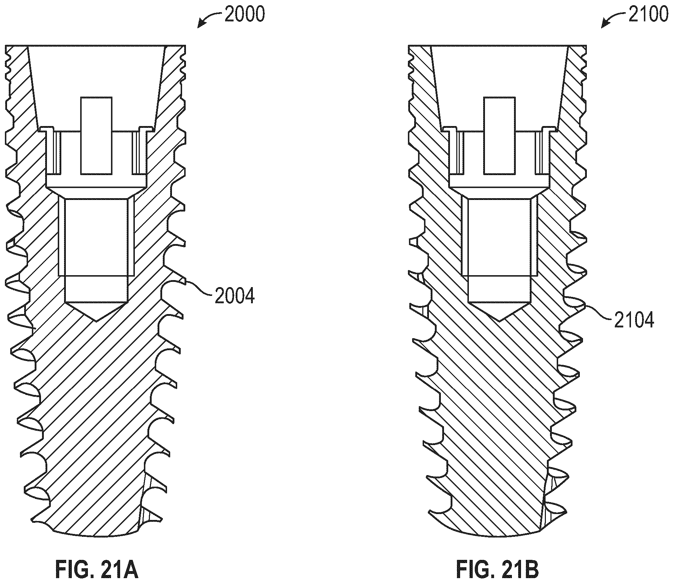

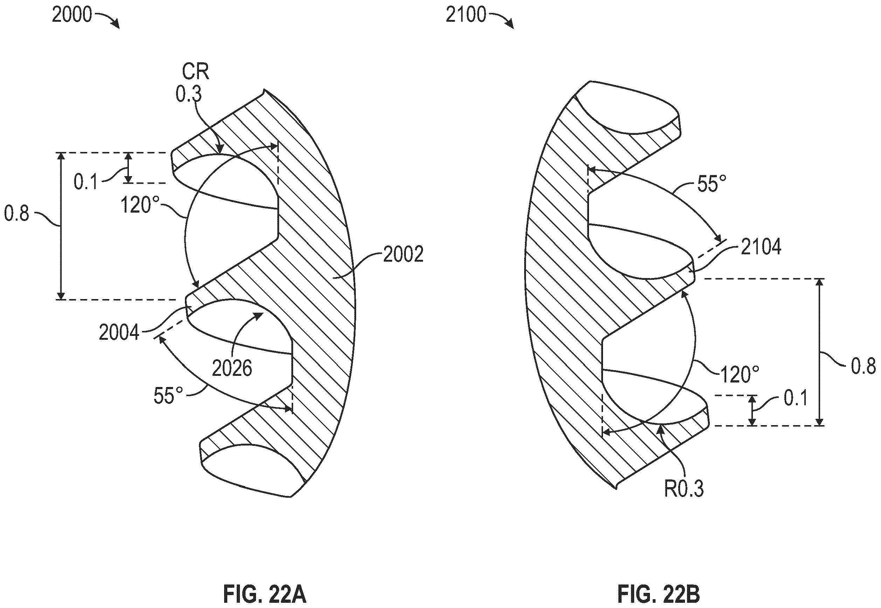

FIGS. 20A, 21A and 22A show a dental implant 2000 according to a ninth configuration. The dental implant 2000 can have a configuration similar to that of the dental implant 1600 of FIGS. 16, 17B and 18B but differs as best shown in FIG. 22A in that dental implant 2000 includes a thread design for the first thread 2004 that has a first side that form part of an undercut space 2026. The first side of the first thread 2004 (and hence part of the undercut space 2026 defined thereby) is formed by a continuous radius CR that extends from the base of the first thread 2004 (from a body 2002) to a crest thereof. The continuous radius CR provides for an exaggerated curvature to the apical side of the first thread 2004. As shown in the embodiment of FIG. 22A, the continuous radius CR can be 0.3 mm with a pitch of 0.8 mm and a thread thickness of 0.1 mm. Thus, the continuous radius CR can extend for 37.5% of the pitch. However, other lengths for the continuous radius CR are contemplated. The continuous radius CR for this design for the dental implant 2000 is similar to the radius R shown in FIGS. 4 and 15 except that the radius of curvature for the continuous radius CR extends closer toward the tip/crest of the thread whereas with the other designs the radius terminates at a location closer to the base. Therefore, it is contemplated that the other designs reviewed previously can be provided with radius of curvatures of various lengths providing for different curvature of radial cuts as desired. As discussed previously, the dimensions provided herein are purely exemplary of one example of the dental implant 2000.

FIGS. 20B, 21B and 22B shows a dental implant 2100 according to a tenth configuration. The dental implant 2100 can have a configuration similar to that of FIGS. 20A, 21A and 22A but can have the thread configuration similar to that of FIGS. 17A and 18A and 10 and 10A discussed previously. Thus, the dental implant 2100 has a reverse thread orientation for the first thread 2104 for the example of FIGS. 20B, 21B and 22B.

Purely by way of example, the length of any of the dental implants described and shown herein may be in the range of 5-19 mm, depending on the clinical situation. In some examples, the outer diameter of the dental implant may suitably be in the range of 2-6 mm, such as 3-5 mm. The dental implant may be substantially cylindrical or slightly tapering from the coronal end towards the apical end. If the dental implant has a slight tapering, the body of the dental implant and the outer periphery defined by e.g. thread tips/crests may have the same or different angle of taper. Furthermore, the body of the dental implant may be cylindrical while the thread tips/crests describe a conicity or, conversely, the body of the dental implant may be tapered while the thread tips/crests describe a generally cylindrical geometry. Alternatively, the dental implant may comprise a combination of one or more cylindrical and/or one or more tapering portions. Thus, one or more portions of the dental implant may have e.g. thread tips/crests lying in a common imaginary cylindrical surface, which cylindrical surface is parallel with the longitudinal axis of the dental implant. Alternatively or additionally, one or more portions of the dental implant may have thread tips/crests lying in an imaginary conical surface which in the apical direction is tapering towards the longitudinal axis. The discussion of this paragraph can be applicable in certain examples/embodiments but may not apply to others of the examples/embodiments reviewed above.

According to at least one example embodiment, one or more of the dental implants illustrated and discussed herein may be provided with micro-threads having a height in the range of 0.02-0.2 mm, such as 0.05-.015 mm, for instance 0.1 mm. According to at least one example embodiment, the dental implant may be provided with macro-threads having a height in the range of 0.25-0.35 mm, such as 0.3 mm. However, other dimensions are contemplated according to further examples.

Suitably, micro-threads may be located coronally of macro-threads. For instance, micro-threads may be arranged to engage dense cortical bone and macro-threads may be arranged to engage porous spongious/cancellous bone. In some examples, the lead of a micro-thread suitably corresponds to the lead of a macro-thread. The macro-thread pitch may, as an example, be 2-4 times, such as 3 times, the pitch of the micro-threads. The pitch (top-to-top spacing) at a portion provided with micro-threads may be around 0.10-0.35 mm, for instance 0.20-0.24 mm. The pitch (top-to-top spacing) at a portion provided with macro-threads may be around 0.30-1.2 mm, for instance 0.60-0.72 mm or from about 0.8 to 0.9 mm. However, other dimensions are contemplated according to further examples.

Micro-threads can be regarded as defined, oriented roughness. A non-oriented roughness having smaller dimensions, for instance obtained by blasting, etching, etc., may be superimposed on micro-threads as well as on macro-threads. Furthermore, it is contemplated herein that according to one embodiment only the micro-threads in the coronal portion are angulated and have the undercut space and the macro-threads in the apical portion do not have any angulation forming the undercut space (thus, the macro-treads utilize existing/traditional macro-thread design forming no undercut). The micro-thread design in the coronal portion of such example can be similar to FIGS. 11 and 15. Furthermore, alternatively according to yet another embodiment the micro-threads can alternatively be angled in the apical-lateral direction (as shown for some macro-thread embodiments discussed previously).

### Examples &Additional Notes

To further illustrate the apparatuses, systems and methods disclosed herein, the following non-limiting examples are provided below and referred to as aspects.

In some aspects, the techniques described herein relate to a dental implant optionally including: a body having a coronal portion with a coronal end, an intermediate portion and an apical portion with an apical end, the body having a longitudinal axis extending from the coronal end to the apical end; a first thread extending along and from at least one of: part of the apical portion or part of the coronal portion, wherein the first thread includes: a first side extending from the body; a crest connected to the first side at an outer extent of the first side; and a second side connected to the crest on an opposing side from the first side, wherein the second side extends from the crest to the body, wherein the second side forms an acute angle of between 45 and 85 degrees with respect to an outer surface of the body to create an undercut space adjacent thereto that provides an interlocking engagement with bone or an extraction socket to resist a lateral force applied on the dental implant.

In some aspects, the techniques described herein relate to a dental implant, wherein the first side optionally forms an obtuse angle with respect to the outer surface of the body.

In some aspects, the techniques described herein relate to a dental implant, wherein optionally the first side of the first thread is substantially parallel to the second side.

In some aspects, the techniques described herein relate to a dental implant, wherein optionally the first side is formed by substantially a single surface that is arranged at the obtuse angle, and wherein optionally the second side is formed by substantially a single surface that is arranged at the acute angle, whereby, the first thread is substantially completely angled on both the first side and the second side.

In some aspects, the techniques described herein relate to a dental implant, wherein optionally the first side is a coronal side and the second side is an apical side of the first thread.

In some aspects, the techniques described herein relate to a dental implant, wherein optionally the body has one of: a substantially uniform diameter for up to 85% of the apical portion or a taper resulting in a reducing diameter along the apical portion from coronal to apical, and wherein optionally the first thread maintains substantially a same outer diameter for the crest between at least 50% to 85% of a longitudinal extent of the apical portion before reducing in diameter toward the apical end.

In some aspects, the techniques described herein relate to a dental implant, wherein optionally the body is configured to insert into an osteotomy having a same geometry whether the body has the substantially uniform diameter or the taper resulting in the reducing diameter.

In some aspects, the techniques described herein relate to a dental implant, wherein optionally the undercut space is at least partially formed by a groove extending into the body adjacent the first side.

In some aspects, the techniques described herein relate to a dental implant, wherein the first side is formed by a substantially continuous radius that extends from the body to the crest.

In some aspects, the techniques described herein relate to a dental implant, further optionally including a second thread extending along and from at least a second part of: the coronal portion of the body or the apical portion of the body, wherein the second thread optionally includes: a coronal side extending from the body; a second crest connected to the coronal side at an outer extent of the coronal side; and an apical side connected to the second crest on an opposing side from the coronal side, wherein the apical side extends from the second crest to body; wherein the coronal side forms a second acute angle of between 45 and 85 degrees with respect to the outer surface of the body to create a space with the crest and the body that provides a second interlocking engagement with the bone or the extraction socket.

In some aspects, the techniques described herein relate to a dental implant, wherein optionally the first thread is angulated to extend one of apical-lateral or coronal-lateral and the second thread is angulated to extend one of apical-lateral or coronal-lateral.

In some aspects, the techniques described herein relate to a dental implant, wherein optionally if the first thread is angulated to extend apical-lateral the second thread is angulated to extend coronal-lateral, and wherein optionally if the first thread is angulated to extend coronal-lateral the second thread is angulated to extend apical-lateral.

In some aspects, the techniques described herein relate to a dental implant, wherein optionally the first thread is a macro-thread and the second thread is a micro-thread, wherein optionally first thread is configured to form a plurality of self-cutting features and the second thread forms one or more self-cutting features wherein optionally the plurality of self-cutting features and the one or more self-cutting features are from a flute that extends continuously from the apical portion to the coronal portion.

In some aspects, the techniques described herein relate to a dental implant, wherein optionally the dental implant is configured to achieve contact with the bone for substantially an entirety of a surface area of the body and the first thread.

In some aspects, the techniques described herein relate to a dental implant, wherein optionally the crest has a reduced thickness as compared with a base of the first thread that forms a connection with the body.

In some aspects, the techniques described herein relate to a dental implant optionally including: a body having a coronal portion with a coronal end, an intermediate portion and an apical portion with an apical end, the body having a longitudinal axis extending from the coronal end to the apical end; a first thread extending along and from at least one of: part of the apical portion of the body or part of the coronal portion of the body, wherein the first thread has a first side formed by substantially a single surface that is arranged at an obtuse angle to an outer surface of the body and a second side formed by substantially a single surface that is arranged at an acute angle to the outer surface of the body, whereby, the first thread is substantially completely angled on both the first side and the second side thereof or completely radiused on at least the first side thereof from the outer surface of the body to the a crest of the first thread such that the first thread forms an undercut space adjacent thereto that provides an interlocking engagement with a bone or an extraction socket to resist a lateral force applied on the dental implant.

In some aspects, the techniques described herein relate to a dental implant, wherein optionally the body and first thread are configured to have a first portion of a circumference of the body and the first thread exposed from the bone or the extraction socket and the first thread is configured to provide sufficient fixation to resist the lateral force when engaging the bone or the extraction socket along only a second portion of the circumference of the body and the first thread.

In some aspects, the techniques described herein relate to a dental implant, wherein optionally the second side forms an acute angle of between 45 and 85 degrees with respect to an outer surface of the body.

In some aspects, the techniques described herein relate to a dental implant, wherein optionally the body has one of: a substantially uniform diameter for up to 85% of the apical portion or a taper resulting in a reducing diameter along the apical portion from coronal to apical, and wherein optionally the first thread maintains substantially a same outer diameter for the first thread between at least 50% to 85% of a longitudinal extent of the apical portion before reducing in diameter toward the apical end.

In some aspects, the techniques described herein relate to a dental implant, further optionally including a second thread extending along and from at least part of the coronal portion of the body, wherein the second thread includes: a coronal side extending from the body; a crest connected to the coronal side at an outer extent of the coronal side; and an apical side connected to the crest on an opposing side from the coronal side, wherein optionally the apical side extends from the crest to body; wherein optionally the coronal side forms an acute angle of between 45 and 85 degrees with respect to the outer surface of the body to create a space with the crest and the body that provides a second interlocking engagement with the bone or the extraction socket.

In some aspects, the techniques described herein relate to a dental implant, wherein optionally the first thread is angulated to extend one of apical-lateral or coronal-lateral and the second thread is angulated to extend to apical-lateral or coronal-lateral, wherein optionally if the first thread is angulated to extend apical-lateral the second thread is angulated to extend coronal-lateral, and wherein optionally if the first thread is angulated to extend coronal-lateral the second thread is angulated to extend apical-lateral.

In some aspects, the techniques described herein relate to a dental implant, wherein optionally the dental implant is configured to achieve contact with the bone for substantially an entirety of a surface area of the body and the first thread.

In some aspects, the techniques described herein relate to a method of implanting a dental implant into a bone, the method optionally including: drilling to create an aperture, wherein the aperture has substantially a same diameter as a diameter of an apical tip of a body of the dental implant; inserting the dental implant into the aperture; engaging the dental implant with the bone in both an apical direction using a first thread and a coronal direction using a second thread.

In some aspects, the techniques described herein relate to a method, wherein optionally engaging the dental implant is from the first thread being angulated in an apical-lateral direction to form an undercut space adjacent an apical side of the first thread and from the second thread being angulated in a coronal-lateral direction to create a space adjacent a coronal side of the second thread.

The above aspects can include any one or combination of features or elements discussed or recited herein.

The above description is intended to be illustrative, and not restrictive. For example, the above-described examples (or one or more aspects thereof) may be used in combination with each other. Other examples can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above detailed description, various features may be grouped together to streamline the disclosure. This should not be interpreted as intending that an unclaimed disclosed feature is essential to any claim. Rather, inventive subject matter may lie in less than all features of a particular disclosed example. Thus, the following claims are hereby incorporated into the detailed description as examples or embodiments, with each claim standing on its own as a separate example, and it is contemplated that such examples can be combined with each other in various combinations or permutations. The scope of the invention should be determined with reference to the appended claims, along with the full scope of equivalents to which such claims are entitled.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventor also contemplate examples in which only those elements shown or described are provided. Moreover, the present inventor also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A dental implant comprising:
a body having a coronal portion with a coronal end, an intermediate portion and an apical portion with an apical end, the body having a longitudinal axis extending from the coronal end to the apical end;
a first thread extending along and from at least one of: part of the apical portion or part of the coronal portion, wherein the first thread includes:
a first side extending from the body;
a crest connected to the first side at an outer extent of the first side; and
a second side connected to the crest on an opposing side from the first side, wherein the second side extends from the crest to the body, wherein the second side forms an acute angle of between 45 and 85 degrees with respect to an outer surface of the body to create an undercut space adjacent thereto that provides an interlocking engagement with bone or an extraction socket to resist a lateral force applied on the dental implant.

2. The dental implant of claim 1, wherein the first side forms an obtuse angle with respect to the outer surface of the body.

3. The dental implant of claim 2, wherein the first side of the first thread is substantially parallel to the second side.

4. The dental implant of claim 2, wherein the first side is formed by substantially a single surface that is arranged at the obtuse angle, and wherein the second side is formed by substantially a single surface that is arranged at the acute angle, whereby, the first thread is substantially completely angled on both the first side and the second side.

5. The dental implant of any one of claims 1-4, wherein the first side is a coronal side and the second side is an apical side of the first thread.

6. The dental implant of any one of claims 1-4, wherein the body has one of: a substantially uniform diameter for up to 85% of the apical portion or a taper resulting in a reducing diameter along the apical portion from coronal to apical, and wherein the first thread maintains substantially a same outer diameter for the crest between at least 50% to 85% of a longitudinal extent of the apical portion before reducing in diameter toward the apical end.

7. The dental implant of claim 6, wherein the body is configured to insert into an osteotomy having a same geometry whether the body has the substantially uniform diameter or the taper resulting in the reducing diameter.

8. The dental implant of any one of claims 1-5, further comprising a second thread extending along and from at least a second part of: the coronal portion of the body or the apical portion of the body, wherein the second thread includes:
a coronal side extending from the body;
a second crest connected to the coronal side at an outer extent of the coronal side; and
an apical side connected to the second crest on an opposing side from the coronal side, wherein the apical side extends from the second crest to body;
wherein the coronal side forms a second acute angle of between 45 and 85 degrees with respect to the outer surface of the body to create a space with the crest and the body that provides a second interlocking engagement with the bone or the extraction socket.

9. The dental implant of claim 8, wherein the first thread is angulated to extend one of apical-lateral or coronal-lateral and the second thread is angulated to extend one of apical-lateral or coronal-lateral.

10. The dental implant of claim 9, wherein if the first thread is angulated to extend apical-lateral the second thread is angulated to extend coronal-lateral, and wherein if the first thread is angulated to extend coronal-lateral the second thread is angulated to extend apical-lateral.

11. The dental implant of any one of claims 8-10, wherein the first thread is a macro-thread and the second thread is a micro-thread, wherein first thread is configured to form a plurality of self-cutting features and the second thread forms one or more self-cutting features wherein the plurality of self-cutting features and the one or more self-cutting features are from a flute that extends continuously from the apical portion to the coronal portion.

12. The dental implant of any one of claims 1-11, wherein the dental implant is configured to achieve contact with the bone for substantially an entirety of a surface area of the body and the first thread.

13. The dental implant of any one of claims 1-12, wherein the crest has a reduced thickness as compared with a base of the first thread that forms a connection with the body.

14. The dental implant of any one of claims 1-13, wherein the undercut space is at least partially formed by a groove extending into the body adjacent the first side or wherein the first side is formed by a substantially continuous radius that extends from the body to the crest.

15. A method of implanting a dental implant into a bone, the method comprising:
drilling to create an aperture, wherein the aperture has substantially a same diameter as a diameter of an apical tip of a body of the dental implant;
inserting the dental implant into the aperture;
engaging the dental implant with the bone in both an apical direction using a first thread and a coronal direction using a second thread.
